# EUROPEAN PATENT SPECIFICATION

(11) **EP 1 912 786 B1**
(45) Date of publication and mention of the grant of the patent: **03.04.2019**
(21) Application number: 06764941.8
(22) Date of filing: 13.07.2006
(51) Int. Cl.: B32B 17/06, C03C 27/12, C09K 21/02, C01B 33/32, E06B 5/16

(54) **FIRE RESISTANT GLAZINGS**
BRANDSCHUTZVERGLASUNGEN
VERNIS RÉSISTANTS AU FEU

(30) Priority: 19.07.2005 GB 0514753
(43) Date of publication of application: 23.04.2008
(73) Proprietor: Pilkington Group Limited, Lathom, Nr. Ormskirk, Lancashire L40 5UF (GB)
(72) Inventor: HOLLAND, John Richard, Rufford, Ormskirk, Lancashire L40 1S (GB); HOLDEN, David William, Wigan, Greater Manchester WN5 8HP (GB); BOND, Stephen Ian, Warrington, Cheshire WA5 4LB (GB); VARMA, Karikath Sukumar, Birkdale, Southport, Merseyside PR8 2BE (GB)
(74) Representative: Teasdale, Nicola Joanne
(86) International application number: PCT/GB2006/002592
(87) International publication number: WO 2007/010202

(56) References cited:
- EP-A- 1 431 027
- WO-A-2006/002773
- WO-A-2006/087121
- GB-A- 714 378
- US-A- 5 766 770
- PATENT ABSTRACTS OF JAPAN vol. 1996, no. 01, 31 January 1996 (1996-01-31) & JP 07 242411 A (NIPPON CHEM IND CO LTD), 19 September 1995 (1995-09-19)

## Description

This invention relates to fire protection glazing systems which exhibit improved long term UV stability, to methods for the production of such glazings, to novel interlayers useful in such glazings and to novel solutions useful in the production of such interlayers.

Fire resistant laminated glazings comprising at least one interlayer of an intumescent material and at least two panes of glass are well known. One common type of such glazings comprises an intumescent interlayer which is obtained by drying an aqueous solution of an alkali metal silicate solution. Pilkington plc sells this type of glazing under its trade marks PYROSTOP and PYRODUR. When these laminates are exposed to a fire the interlayer intumesces and expands to form a foam. The foam provides a thermally insulating layer which acts as a barrier to infra-red radiation and also helps to maintain the integrity of the glazing thus restricting the spread of the fire. These glazings can meet the requirements of most applicable building regulations and are widely used in architecture and building.

The interlayers which are incorporated into these laminated glazings are manufactured with care so as to ensure that the interlayer is uniform and optically clear. Without the use of a UV filtering/absorbing polymer interlayer for external applications, one problem which may be encountered is a tendency for their aesthetic properties to deteriorate slightly over an extended period of time. Specifically the glazings may assume a slightly hazy appearance and in the extreme case discrete microbubbles of gas may be visible in the interlayer. This problem is known to be associated with exposure to direct ultra-violet radiation over an extended period, usually a few years.

GB 2150463 discloses fire resistant laminated glazings wherein one of the panes has a coating which screens ultra violet radiation on its external surface. USP 4626301 discloses a method for producing an intumescent interlayer by drying an alkali metal silicate waterglass solution in an atmosphere comprising at least 30% by volume of free oxygen. Fire resistant glazings incorporating an interlayer produced using this method are stated to exhibit, improved stability under ultra violet radiation. USP 5766770 discloses that the introduction of a potassium silicate waterglass into an interlayer results in a laminated glazing having a reduced sensitivity to ultra violet radiation. WO 2006/002773, which represents prior art under the provisions of Article 54(3) EPC only, discloses a stable, pourable silicon dioxide dispersion, in which the average, number-related aggregate diameter of the silicon dioxide particles in dispersion is less than 200 nm, and which comprises at least 35 wt.% of a silicon dioxide powder, 3 to 35 wt.% of at least one polyol, 20 to 60 wt.% of water, 0 to 10 wt.% of an additive and a substance having an alkaline action in an amount such that a pH of 10 < pH < 12 is established. EP 1 431 027 discloses a fire protection means including at least one hybrid foil system. At least one foil of the system is coated with intumescent material. None of these proposals has proved to satisfy the requirement for a glazing whose appearance does not significantly deteriorate over the lifetime of the glazing.

We have now discovered that the instability of these intumescent interlayers is related at least to some degree to the presence of photosensitive transition metal complexes which can undergo photo reduction to form zero valent transition metal atoms. These metal atoms may react with water to produce the metal hydroxide and hydrogen gas. The transition metal ions are present in the known interlayers because those interlayers are obtained by drying a silicate solution which has been derived from a mineral source containing small quantities of transition metal ions such as iron, nickel and cobalt. Although these transition metal ions are generally present in an amount of no more than 1000 ppm in the alkali metal silicate solution their presence results in the formation of sufficient photosensitive complexes to significantly destabilise the interlayer over a prolonged period.

This invention describes a method of preparing an interlayer of intumescent material and of increasing the UV stability of the intumescent material and reducing the concentration of photosensitive transition metal complexes in the interlayer for use in a glazing.

This reduction may be achieved in a variety of ways which may be employed separately or simultaneously. A first method comprises the introduction of an additive to the material which additive serves to promote the formation of transition metal complexes or compounds which are not photosensitive thereby reducing the concentration of photosensitive complexes. Additives which are potentially useful include oxidising agents which minimise photoreduction of the transition metal complexes, metal ions which inhibit the photoreduction reaction and chelating agents which reduce the formation of photosensitive complexes. A second method comprises a reduction in the concentration of those transition metal ions which are believed to form photosensitive metal complexes either by removing them from the alkali metal silicate solution or by using a silicate solution which comprises a lower concentration of those transition metals. These methods may be used in conjunction with methods which shield the interlayer from UV radiation such as incorporating a UV absorbing material in the interlayer, providing a UV absorbing coating on at least one surface of the glass panes or using a glass pane which absorbs UV radiation.

Intumescent materials comprising a reduced concentration of photosensitive transition metal complexes and fire resistant glazings comprising an interlayer comprising such a material are also believed to be novel and provide a further aspect of the present invention.

From a second aspect this invention provides a fire resistant glazing comprising:
i) at least one intumescent interlayer; and
ii) at least two glass panes, said interlayer comprising:
   a) an alkali metal silicate waterglass; and
   b) one or more transition metals capable of forming one or more photosensitive transition metal complexes characterised in that: the total concentration of transition metals capable of forming photosensitive transition metal complexes in said interlayer is less than 40ppm by weight. The total concentration of transition metals capable of forming photosensitive transition metal complexes in said interlayer is sufficiently low to reduce destabilisation of the interlayer upon prolonged exposure to ultra violet radiation.

In a preferred embodiment the concentration of transition metals ions which are capable of forming a photosensitive complex is reduced to a level below that which would destabilise the interlayer. The particular transition metal ions whose concentrations are reduced in the preferred embodiments of the invention are iron, nickel and cobalt. The most particular transition metal whose concentration is reduced in these preferred embodiments is iron.

The total concentration of these transition metal ions in the interlayer is preferably less than 40 ppm and more preferably less than 20 ppm and most preferably less than 10 ppm. These concentrations are generally sufficient to result in the formation of a glazing whose sensitivity to ultra violet radiation is reduced or in the preferred embodiments reduced to a level which is not significant over the lifetime of the glazing.

One way to produce the interlayers useful in the processes of this invention is to utilise an alkali metal silicate waterglass which has been produced from a source containing smaller amounts of transition metals. Such sources are available for example as reagent grades of silica and alkali metal hydroxide,

The preferred alkali metal waterglasses for use in the production of the interlayers of this invention are sodium and potassium silicate waterglasses. Any of the sodium silicate waterglasses which are known for use in the art may be used in this invention although preferably they will contain only a minor proportion of transition metal contaminants.

The sodium silicates may be those wherein the weight ratio of SiO₂:Na₂O is at least 1.6:1 and preferably is in the range 2.0:1 to 6.0:1 more usually in the range 2.0:1 to 4.0:1 The known glazings have generally been based upon commercially available sodium silicate waterglass solutions wherein the weight ratio of SiO_{2:}Na₂O is either 2.5:1, 2.85:1, 3.0:1 or 3,3:1. However these commercially available solutions generally comprise an unacceptably high level of photosensitive transition metal complexes and are thereby less preferred for use in the present invention. The use of reagent grades of silica and alkali to produce the waterglass facilitates the production of a waterglass which has any particular weight ratio of SiO₂:Na₂O which is desired, In the preferred embodiments the silicate is one which has a ratio substantially the same as is used to produce a known interlayer. This enables the interlayer to be produced using the known process to produce a product which is substantially identical to the known product which has the improved UV stability of the present invention.
Potassium silicate and lithium silicate waterglasses may also be used to produce the interlayers of the present invention. In general they will be used as a partial replacement for the sodium silicate waterglass and the molar ratio of sodium ions to the total of potassium and/or lithium ions is at least 2:1 Where a potassium silicate waterglass is used it is preferably one in which the ratio of SiO₂:K₂O is in the range 1.4:1 to 2.5:1.

In a particularly preferred embodiment the alkali metal silicate waterglass used to produce the interlayers of this invention comprises a mixture of a sodium silicate with a potassium silicate wherein the molar ratio of sodium ions to potassium ions is at least 4:1

The solutions used to produce the interlayers of this invention may further comprise one or more polyhydric compounds which are used in the production of the known interlayers. Polyhydric compounds which have been proposed for use include glycerol, a derivative of glycerine or a mono or polysaccharide in particular a sugar. The most commonly used polyhydric compound and the preferred compound for use in the present invention is glycerol. Where a polyhydric compound is used it is preferably a reagent grade material. The polyhydric compound is preferably one which contains a minimal quantity of transition metal impurities.

The solutions useful in the production of the interlayers of this invention must be clear, stable solutions which are capable of being dried to form a clear stable intumescent interlayer. In general before drying these waterglass solutions will comprise from 30% to 70% by weight of water and from 6% to 10% by weight of a polyhydric compound the balance being the silicate. Waterglass solutions comprising from 30% to 70% by weight water and from 6% to 10% by weight of a polyhydric compound and less than 10ppm of transition metals are believed to be novel and comprise a further aspect of this invention.

One method for the production of a solid intumescent interlayer is to dry these solutions under carefully controlled conditions until the water content is reduced to a value in the range 10 to 35 % by weight. In general the water content of the solution is reduced by about a half during the drying process. The drying may be carried out using known techniques. In one process the solution may be spread upon the surface of a glass sheet which is provided with a barrier around the edge of that surface which retains the solution on the surface. The quantity of solution which is employed will vary according to the desired thickness of the interlayer. The quantity of solution which is needed to produce an interlayer of a particular thickness may be determined by routine experiment

The thickness of the dried interlayer will generally be in the range 0.1 to 5.0 mm, preferably from 0.5 to 2.0 mm. The formation of thicker layers requires a longer drying time and is thereby disadvantageous. Thinner layers can be produced in shorter drying times. A glass laminate having a thicker interlayer may be produced by bringing two glass sheets each having a thinner interlayer on one surface thereof into face to face contact

The thickness of the glass sheet on which the solutions are dried may vary typically from 2.0 mm to 4.0 mm. An edge barrier formed from a material such as a clay may be provided around the edge of the glass sheet so as to retain the solution on the glass. The glass will most commonly be soda lime float glass. Toughened and annealed float glass may also be used. Glass panes having a functional coating upon one or both surfaces may also be used. The coated surface may be on the inside or the outside of the laminate. Coatings which are known to absorb UV radiation may be especially advantageous. Other coated glass panes which may be used include solar control glasses and self cleaning photoactive glasses.

Mounting the second sheet so that its glass surface contacts the interlayer on the first sheet and subsequently placing a third glass sheet on top of the interlayer on the second glass sheet results in a laminate having two interlayers mounted between three panes of glass.

In an alternative process the solutions may be dried on the surface of a substrate and provided that the interlayer has sufficient mechanical strength it can be separated from the substrate and placed between two glass sheets to form a fire resistant laminate. Suitable substrates on which the solution could be dried include glass, metals such as stainless steel and polymeric materials such as PTFE and polyolefins such as polypropylene. Where the substrate is clear and transparent e.g. when the substrate is a clear polymeric film, the film with an interlayer dried upon one surface may be mounted between two glass panes to form a fire resistant laminate without the need to separate the dried interlayer from the substrate. WO 03/024682 discloses processes of this type for the production of a fire resistant glazing.

Intumescent interlayers may also be produced using granular hydrated alkali metal silicates which are mixed with the quantity of water required to form the interlayer. The interlayer may be formed by heating this mixture until a clear material is formed. An interlayer may conveniently be formed by introducing the mixture between two opposed glass panes heating this assembly. USP 4268581 describes the production of fire resistant laminates by subjecting.such an assembly to a lamination process.

Another type of process by which the intumescent interlayers may be formed is a cast in place process. Such processes are described for example in USP 5565273 and USP 5437902 and comprise the introduction of a solution comprising an alkali metal silicate and a curing agent between two opposed glass panes and curing the solution to form an interlayer. The interlayers produced by these processes typically comprise from 40 to 60 % by weight of water. They may also contain an increased proportion of polyhydric compound typically up to 30% by weight.
The invention is illustrated by the following examples in which the iron content is measured using ICP-MS (except where indicated otherwise).

### Example 1

Preparation of low iron sodium silicate solution A from a low iron silica-sol solution and a sodium hydroxide solution.

The starting solutions are:
(i) A commercially available silica-sol with a silica particle average diameter of 12nm, 40% by weight solids and 17ppm by weight iron.
(ii) A 35.2% aqueous sodium hydroxide solution that has 2ppm by weight iron.

69.26g of solution (i) is mixed with 30.74g of solution (ii) and the mixture maintained at a temperature between 50-70°C. The mixture is stirred for 60 minutes after which time, a clear solution is produced that has a SiO2:Na2O ratio by weight of 3.3:1, 36.1% by weight solids and 10ppm by weight iron.

### Example 2

Preparation of a low iron sodium silicate solution B from a low iron silica powder and a sodium hydroxide solution.

27.7g of a high purity fumed silica is dissolved in a 15% aqueous sodium hydroxide solution. The mixture is stirred for 3 hours whilst maintaining the temperature at between 50-70°C. The resulting solution has a SiO2:Na2O ratio by weight of 3.3:1, has 36.1% by weight solids and contains less iron than can be detected by analysis (<1ppm).

### Examples 3-9

The following sodium silicate waterglass solutions were used to prepare a pouring solution for a fire glazing.
(C) A commercially available ultra low iron sodium silicate waterglass solution with an SiO2:Na2O ratio by weight of 3.3:1, 36% by weight solids and 2.7ppm by weight iron.
(D)A sodium silicate waterglass solution with an SiO2:Na2O ratio by weight of 3.3:1, 36.1% by weight and 60ppm by weight iron.
(E) A sodium silicate waterglass solution with a SiO2:Na2O ratio by weight of 3.3:1, 33.9% by weight solids and 40ppm by weight iron.
(F) A sodium silicate waterglass solution with SiO2:Na2O ratio by weight of 3.3:1, 37% by weight solids and 30ppm by weight iron.
(G) A sodium silicate waterglass solution with SiO2:Na2O ratio by weight of 3.3:1, 38.1% by weight solids and 76ppm by weight iron.
(A) produced by method described in example 1
(B) produced by method described in example 2

A fire resistant glazing was made according to the following method. A pouring solution was made using each sodium silicate waterglass solution (A) (B) (C), (D), (E), (F), (G) and glycerol. To 93.1g of each sodium silicate waterglass solution was added 6.0g of glycerol. Each mixture of sodium silicate waterglass and glycerol was mixed using a stirrer to produce each final pouring solution. The iron content of the resulting pouring solutions is given in table 1.

To prepare the fire resistant glazing, a piece of 3mm thick soda-lime-silica float glass, 30cm x 30cm was used as a substrate for the pouring solution. A barrier was made around the perimeter of one surface of the piece of float glass. The pouring solution was poured onto the piece of glass such that a mass of solution of 5kg/m² of glass is used. The glass sheet was placed in an oven and dried over a prolonged period in a controlled atmosphere until the water content of the layer had reduced to about 26% by weight. A clear layer having a depth of approximately 1.4mm had formed on the surface of the glass. A second sheet of 3mm thickness soda-lime-silica float glass was placed on top of the dried layer and a laminate was produced.

Pieces of each laminated fire resistant glazing approximately 45mm x 115mm were tested for ultraviolet stability using a Xenotest 150S with a xenon arc lamp

The ultraviolet stability of the solid intumescent material in layer form was assessed by periodically removing the sample from the Xenotest apparatus and assessing it by eye for bubbles according to procedure EN 12543. Once assessed, the sample was returned to the Xenotest and the test continued until after which time, the assessment indicated bubbles have been generated. At this time, the laminate was removed from the Xenotest and the total time of exposure to ultraviolet was recorded.

The fire resistant glazing containing solid intumescent material in layer form with an iron level of just over 120ppm produced from the sodium silicate waterglass F shows bubbles after about 50hours in the Xenotest. When the sodium silicate solution E was used to produce the solid intumescent material in layer form such that the layer contained about 50ppm iron, the fire resistant glazing in the Xenotest did not show bubbles until after almost 100 hours. As the iron content of the solid intumescent material in layer form in the fire resistant glazing decreases, the length of time before bubbles are observed in the Xenotest increases. Where the layer is produced from the lower iron content sodium silicate pouring solutions B or C sodium silicate waterglasses no bubbles were observed until after almost 300 hours in the Xenotest. There is a clear advantage towards lower iron levels, especially less than 10ppm by weight in the layer. The results of the Xenotest for each pouring solution, are shown in Figure 2.

**Table 1**

| Water Glass | Iron content of water glass solution in ppm | Iron content of dried layer in ppm (layer is 26% water by weight)* |
|---|---|---|
| Solution A of Example 1 | 10 | 17 |
| Solution B of Example 1 | <1 | <2 |
| Solution C | 2.7 | 5 |
| Solution D | 60 | 104 |
| Solution E | 40 | 73 |
| Solution F | 30 | 51 |
| Solution G | 76 | 126 |

| | | |
|---|---|---|
| * calculated value | | |

### Example 10

The commercially available ultra low iron sodium silicate solution (Solution A of Example 1) was mixed with 6.0% glycerol and dried on 3mm float glass. The dried interlayer had a water content of 24.6%. The coated glass was laminated to a second pane of 3mm glass.
The laminated glass was in a Xenotest 150s weatherometer. Appearance of bubbles occurred around 150hrs.

A sample of glass was made in an identical fashion with a water content of 23%, and exposed to intense light radiation on a UV wall as specified in EN 12543-4 1998. Failure occurred due to the formation of bubbles at around 2000hrs exposure, compared to 500-1000 hrs in which a typical commercially available fire resistant glazing fails.

### Example 11

A sodium silicate was prepared from an ultrapure fumed silica with an iron content of 500ppb, semiconductor grade sodium hydroxide with an iron content of 4ppm and water with an iron content of 2ppb. The concentration was adjusted to 37% solids and a SiO₂:Na₂O ratio of 3.3:1. The solution had an overall iron content of 0.5ppm. This was mixed with 6.0% of glycerol whose iron content was 0.3ppm. The solution was dried on 3mm glass and laminated with a second 3mm float glass. The water content of the laminate was 22%.

The sample was exposed to intense light radiation on a UV wall as specified in EN 12543-4 1998. Failure due to the formation of bubbles occurred around 2000hrs exposure, compared to 500-1000 hrs in which a typical commercially available fire resistant glazing fails.

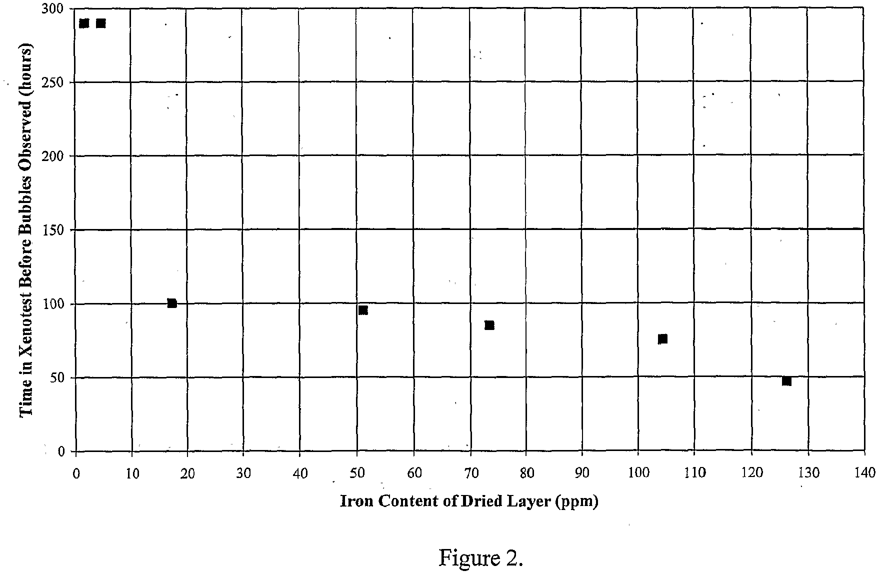

## Claims

1. A fire resistant glazing comprising:
i) at least one intumescent interlayer; and
ii) at least two glass panes, said interlayer comprising:
a) an alkali metal silicate waterglass; and
b) one or more transition metals capable of forming one or more photosensitive transition metal complexes **characterised in that**:
the total concentration of transition metals capable of forming photosensitive transition metal complexes in said interlayer is less than 40ppm by weight.

2. A glazing according to claim 1 **characterised in that** the concentration of iron in the interlayer is less than 40 ppm by weight.

3. A glazing according to claim 1 **characterised in that** the total concentration of iron, cobalt and nickel is less than 40 ppm by weight.

4. A glazing according to claim 2 **characterised in that** the concentration of iron in the interlayer is less than 20ppm by weight.

5. A glazing according to claim 1 **characterised in that** the total concentration of iron, cobalt and nickel in the interlayer is less than 20ppm by weight.

6. A glazing according to any of claims 1 to 3 **characterised in that** the total concentration of transition metals is less than 20ppm by weight.

7. A glazing according to claim 2 **characterised in that** the concentration of iron in the interlayer is less than 10 ppm by weight.

8. A glazing according to claim 1 **characterised in that** the total concentration of iron, cobalt and nickel in the interlayer is less than 10ppm by weight.

9. A glazing according to claim 1 **characterised in that** the total concentration of transition metals in the interlayer is less than 10 ppm by weight.

10. A glazing according to any of the preceding claims **characterised in that** the alkali metal silicate comprises a sodium silicate having a weight ratio SiO₂:Na₂O of from 2.0:1 to 6.0:1

11. A glazing according to claim 10 **characterised in that** the alkali metal silicate comprises a sodium silicate having a weight ratio SiO₂:Na₂O of from 2.0:1 to 4.0:1.

12. A glazing according to any of the preceding claims **characterised in that** the interlayer comprises from 10 to 35% by weight of water.

13. A glazing according to any of claims 1 to 11 **characterised in that** the interlayer comprises from 40 to 60% by weight of water.

14. An intumescent material comprising:
i) an alkali metal silicate; and
ii) from 10 to 60% by weight of water which comprises less than 40ppm by weight of iron, and
wherein the total concentration of iron, cobalt and nickel is less than 40ppm by weight, and wherein said material comprises from 3 to 30% by weight of a polyhydric organic compound.

15. A material according to claim 14 **characterised in that** the polyhydric compound is glycerol.

16. An aqueous sodium silicate solution comprising:
i) from 30 to 70% by weight of water; and
ii) from 6 to 10% of a polyhydric organic compound; and
iii) silicate to balance;
**characterised in that** the solution comprises less than 10ppm by weight of transition metals.

## Patentansprüche

1. Brandschutzverglasung, die umfasst:
i) mindestens eine intumeszente Zwischenschicht und
ii) mindesten zwei Glasscheiben, wobei die Zwischenschicht umfasst:
a) ein Alkalimetallsilicatwasserglas und
b) ein oder mehrere Übergangsmetalle, die imstande sind, einen oder mehrere lichtempfindliche Übergangsmetallkomplexe zu bilden, **dadurch gekennzeichnet, dass**
die Gesamtkonzentration an Übergangsmetallen, die imstande sind, lichtempfindliche Übergangsmetallkomplexe zu bilden, in der Zwischenschicht kleiner als 40 Gewichts-ppm ist.

2. Verglasung nach Anspruch 1, **dadurch gekennzeichnet, dass** die Konzentration an Eisen in der Zwischenschicht kleiner als 40 Gewichts-ppm ist.

3. Verglasung nach Anspruch 1, **dadurch gekennzeichnet, dass** die Gesamtkonzentration an Eisen, Cobalt und Nickel kleiner als 40 Gewichts-ppm ist.

4. Verglasung nach Anspruch 2, **dadurch gekennzeichnet, dass** die Konzentration an Eisen in der Zwischenschicht kleiner als 20 Gewichts-ppm ist.

5. Verglasung nach Anspruch 1, **dadurch gekennzeichnet, dass** die Gesamtkonzentration an Eisen, Cobalt und Nickel in der Zwischenschicht kleiner als 20 Gewichts-ppm ist.

6. Verglasung nach einem der Ansprüche 1 bis 3, **dadurch gekennzeichnet, dass** die Gesamtkonzentration an Übergangsmetallen kleiner als 20 Gewichts-ppm ist.

7. Verglasung nach Anspruch 2, **dadurch gekennzeichnet, dass** die Konzentration an Eisen in der Zwischenschicht kleiner als 10 Gewichts-ppm ist.

8. Verglasung nach Anspruch 1, **dadurch gekennzeichnet, dass** die Gesamtkonzentration an Eisen, Cobalt und Nickel in der Zwischenschicht kleiner als 10 Gewichts-ppm ist.

9. Verglasung nach Anspruch 1, **dadurch gekennzeichnet, dass** die Gesamtkonzentration an Übergangsmetallen in der Zwischenschicht kleiner als 10 Gewichts-ppm ist.

10. Verglasung nach einem der vorhergehenden Ansprüche, **dadurch gekennzeichnet, dass** das Alkalimetallsilicat ein Natriumsilicat umfasst, das ein Gewichtsverhältnis SiO₂:Na₂O von 2,0:1 bis 6,0:1 aufweist.

11. Verglasung nach Anspruch 10, **dadurch gekennzeichnet, dass** das Alkalimetallsilicat ein Natriumsilicat umfasst, das ein Gewichtsverhältnis SiO₂:Na₂O von 2,0:1 bis 4,0:1 aufweist.

12. Verglasung nach einem der vorhergehenden Ansprüche, **dadurch gekennzeichnet, dass** die Zwischenschicht 10 bis 35 Gew.-% Wasser umfasst.

13. Verglasung nach einem der Ansprüche 1 bis 11, **dadurch gekennzeichnet, dass** die Zwischenschicht 40 bis 60 Gew.-% Wasser umfasst.

14. Intumeszentes Material, das umfasst:
i) ein Alkalimetallsilicat und
ii) 10 bis 60 Gew.-% Wasser, das weniger als 40 Gewichts-ppm Eisen umfasst, und
wobei die Gesamtkonzentration an Eisen, Cobalt und Nickel kleiner als 40 Gewichts-ppm ist und wobei das Material 3 bis 30 Gew.-% einer mehrbasigen organischen Verbindung enthält.

15. Material nach Anspruch 14, **dadurch gekennzeichnet, dass** die mehrbasige Verbindung Glycerin ist.

16. Wässrige Natriumsilicatlösung, die umfasst:
i) 30 bis 70 Gew.-% Wasser; und
ii) 6 bis 10 % einer mehrbasigen organischen Verbindung und
iii) Silicat der Rest;
**dadurch gekennzeichnet, dass** die Lösung weniger als 10 Gewichts-ppm Übergangsmetalle umfasst.

## Revendications

1. Vitrage résistant au feu comprenant :
i) au moins une couche intermédiaire intumescente ; et
ii) au moins deux vitres, ladite couche intermédiaire comprenant :
a) un verre soluble en silicate de métal alcalin ; et
b) un ou plusieurs métaux de transition capables de former un ou plusieurs complexes photosensibles de métal de transition **caractérisé en ce que** :
la concentration totale en métaux de transition capables de former des complexes photosensibles de métal de transition dans ladite couche intermédiaire est inférieure à 40 ppm en poids.

2. Vitrage selon la revendication 1 **caractérisé en ce que** la concentration en fer dans la couche intermédiaire est inférieure à 40 ppm en poids.

3. Vitrage selon la revendication 1 **caractérisé en ce que** la concentration totale en fer, en cobalt et en nickel est inférieure à 40 ppm en poids.

4. Vitrage selon la revendication 2 **caractérisé en ce que** la concentration en fer dans la couche intermédiaire est inférieure à 20 ppm en poids.

5. Vitrage selon la revendication 1 **caractérisé en ce que** la concentration totale en fer, en cobalt et en nickel dans la couche intermédiaire est inférieure à 20 ppm en poids.

6. Vitrage selon l'une quelconque des revendications 1 à 3 **caractérisé en ce que** la concentration totale en métaux de transition est inférieure à 20 ppm en poids.

7. Vitrage selon la revendication 2 **caractérisé en ce que** la concentration en fer dans la couche intermédiaire est inférieure à 10 ppm en poids.

8. Vitrage selon la revendication 1 **caractérisé en ce que** la concentration totale en fer, en cobalt et en nickel dans la couche intermédiaire est inférieure à 10 ppm en poids.

9. Vitrage selon la revendication 1 **caractérisé en ce que** la concentration totale en métaux de transition dans la couche intermédiaire est inférieure à 10 ppm en poids.

10. Vitrage selon l'une quelconque des revendications précédentes **caractérisé en ce que** le silicate de métal alcalin comprend un silicate de sodium présentant un rapport en poids Si02 : Na₂O allant de 2,0 : 1 à 6,0 : 1.

11. Vitrage selon la revendication 10 **caractérisé en ce que** le silicate de métal alcalin comprend un silicate de sodium présentant un rapport en poids Si02 : Na₂O allant de 2,0 : 1 à 4,0 : 1.

12. Vitrage selon l'une quelconque des revendications précédentes **caractérisé en ce que** la couche intermédiaire comprend de 10 à 35 % en poids d'eau.

13. Vitrage selon l'une quelconque des revendications 1 à 11 **caractérisé en ce que** la couche intermédiaire comprend de 40 à 60 % en poids d'eau.

14. Matériau intumescent comprenant :
i) un silicate de métal alcalin ; et
ii) de 10 à 60 % en poids d'eau qui comprend moins de 40 ppm en poids de fer, et
dans lequel la concentration totale en fer, en cobalt et en nickel est inférieure à 40 ppm en poids, et dans lequel ledit matériau comprend de 3 à 30 % en poids d'un composé organique polyhydrique.

15. Matériau selon la revendication 14 **caractérisée en ce que** le composé polyhydrique est le glycérol.

16. Solution aqueuse de silicate de sodium comprenant :
i) de 30 à 70 % en poids d'eau ; et
ii) de 6 à 10 % d'un composé organique polyhydrique ; et
iii) le reste étant un silicate ;
**caractérisé en ce que** la solution comprend moins de 10 ppm en poids de métaux de transition.
